Europäisches Patentamt

European Patent Office

Office européen des brevets

(11) Publication number: **0 483 915 A1**

# EUROPEAN PATENT APPLICATION

(21) Application number: 91202764.6

(22) Date of filing: 28.10.91

(51) Int. Cl.5: **C09D 133/06, C08K 5/10**

(30) Priority: 01.11.90 NL 9002380

(43) Date of publication of application:
06.05.92 Bulletin 92/19

(84) Designated Contracting States:
AT BE CH DE DK ES FR GB GR IT LI NL SE

(71) Applicant: DSM N.V.
Het Overloon 1
NL-6411 TE Heerlen(NL)

(72) Inventor: Molhoek, Leendert Jan
Jos Lussenburglaan 17
NL-8072 HV Nunspeet(NL)
Inventor: Wories, Herman Jelle
Romulushof 43
NL-6215 EJ Maastricht(NL)

(74) Representative: den Hartog, Jeroen Hendrikus
Joseph et al
Octrooibureau DSM Postbus 9
NL-6160 MA Geleen(NL)

(54) Binder composition based on an acrylate polymer and a crosslinking agent based on an acetoacetate compound.

(57) The invention relates to a binder composition based on an acrylate polymer and a crosslinking agent based on an acetoacetate compound.

The acrylate polymer is an amine, ketimine or aldimine-functional acrylate polymer with a hydroxyl number lower than 100 mg KOH/gramme and an amine number of between 10 and 150 mg KOH/gramme and the crosslinking agent is a low molecular weight polyacetoacetate.

The present invention relates to a binder composition based on an acrylate polymer and a crosslinking agent based on an acetoacetate compound. The composition is suitable for coating applications.

Such compositions are known from EP-A-136411 describing resin compositions which are based on a hydroxyl-functional acrylate oligomer, which may contain amino groups in addition to the hydroxyl groups, and a crosslinking agent based on an acetoacetate compound which is prepared via a Michael condensation. The curing reaction between hydroxyl groups and acetoacetate groups takes place at temperatures of between 130°C and 200°C.

A disadvantage of these compositions is that the polymer and the crosslinking agent are curable at said high temperatures but they do not cure at room temperature to form a coating with good properties.

It is the object of the invention to provide a binder composition comprising an acrylate polymer and a crosslinking agent based on an acetoacetate compound which can be cured at temperatures of between 10°C and 50°C, preferably at room temperature.

The binder composition according to the invention is characterized in that the acrylate polymer is an amine, ketimine or aldimine-functional acrylate copolymer with a hydroxyl number lower than 100 mg KOH/gram and an amine number of between 10 and 150 mg KOH/gram.

Use of this composition allows the curing reaction between the acrylate polymer and the crosslinking agent based on an acetoacetate compound to take place at relatively lower temperatures such as, for instance, room temperature.

The hydroxyl number of the acrylate polymer is preferably lower than 20 and the amine number of the acrylate polymer is preferably between 30 and 100 mg KOH/gramme.

According to a further preferred embodiment of the invention the hydroxyl number is lower than 5 mg KOH/gram and can be 0 mg KOH/gram.

According to a preferred embodiment of the invention, the crosslinking agent used is a low molecular weight polyacetoacetate. The molecular weight of this crosslinking agent is lower than 1000. This polyacetoacetate is preferably a polyacetoacetate obtained from the reaction of a monofunctional acetoacetate or diketene and a polyhydroxy-functional monomer or oligomer.

By using these low molecular weight polyacetoacetates, an isocyanate-free system, which is capable of curing at room temperature and which has very good properties, is obtained.

The low molecular weight polyacetoacetate based on an acetoacetate or diketene and a polyhydroxyl-functional monomer or oligomer has a theoretical molecular weight of between 150 and 1000. Generally this molecular weight is above 250. The average acetoacetate functionality of the crosslinking agent is generally between 1.5 and 6, preferably between 2 and 4.

The polyacetoacetates are generally liquids with viscosities of between 0.1 dPa.s and 100 dPa.s (measured at 23°C, Emila rotating viscosimeter), which have excellent processing characteristics.

The low molecular weight polyacetoacetate is preferably obtained by re-esterification of an acetoacetate and a polyhydroxy-functional monomer or oligomer.

Suitable examples of the acetoacetate include methylacetoacetate, ethylacetoacetate, isopropylacetoacetate, butylacetoacetate, t-butylacetoacetate, methylbenzylacetoacetate and/or dodecylacetoacetate.

Suitable polyhydroxylfunctional monomers or oligomers include trimethylolpropane, trimethylolethane, cyclohexanedimethanol, 1,6-hexanediol, hexane-2,5-diol, neopentyl glycol, ethylene glycol, diethylene glycol, propylene glycol, 1,2-butanediol, 1,3-butanediol, 1,4-butanediol, (di)sorbitol, (di)pentaerythritol, trishydroxyethylisocyanurate and/or glycerol.

Preferred polyhydroxy-functional monomers include trimethylolpropane, (di)pentaerythritol and/or 1,4-butanediol.

The reesterification may take place at temperatures of between 60°C and 240°C, preferably between 80°C and 170°C, in, for instance, a nitrogen atmosphere. This reaction may be seen in the absence of a catalyst, in the presence of a basic catalyst such as dibutyltin oxide, or in the presence of an acid catalyst such as paratoluenesulphonic acid. The molar ratio between between acetoacetate and the polyhydroxy-functional monomer or oligomer should be between 1.5 : 1 and 15 : 1, preferably between 2.5 : 1 and 7.5 : 1.

An excellent crosslinking agent can be obtained, for example, by re-esterification of methylacetoacetate or ethylacetoacetate with trimethylolpropane. This reaction produces a mixture of trimethylpropane-mono-/di-/triacetoacetate which can be used as crosslinking agent.

The low molecular weight polyacetoacetates can, moreover, be obtained by reacting diketene with a polyhydroxy-functional monomer or oligomer as described above. Such reactions are described, for instance, in the Journal of Paint Technology, Volume 46, 991, April 1974, pp. 70-75.

Suitable amine, ketimine or aldimine-functional acrylate resins can be prepared by reacting epoxy-functional acrylates based on, for example, glycidyl (meth)acrylates with ketimines at temperatures of between 80°C and 110°C in solvents such as ketones, aromatics or butylacetate. They can also be obtained by reaction of a hydroxyl-functional acrylate resin, isocyanates and ketimines or by reaction of a copolymer of a polymerisable isocyanate-functional monomer and other monomers with a ketimine.

The acrylate polymers may be dissolved in the solvents customarily used in the paint industry including toluene, xylene, ketones, butylacetate and glycol ethers. However these polymers may also be dispersed in water.

The acrylic copolymers may be build up from commonly used monomers like for example acrylates, styrene and vinyltoluene.

The amine-functionality may be blocked with a ketone or an aldehyde including acetaldehyde, propionaldehyde, butyraldehyde, benzaldehyde, acetone, methyl ethyl ketone, amyl ketone, isoamyl ketone, methylisobutyl ketone, cyclohexanone and cyclopentanone.

The acrylate polymer and the low molecular weight acetoacetate are mixed in amounts of between 2 and 50 parts by weight, preferably in amounts of between 5 and 15 parts by weight, polyacetoacetate and between 50 and 98 parts by weight, preferably in amounts of between 85 and 95 parts by weight, acrylate polymer. Preferably the components are mixed at temperatures of between 15°C and 30°C. In the reaction between acetoacetate and ketimine/amine, an organic or inorganic acid such as, for instance, paratoluenesulphonic acid or a fatty acid, has a highly catalytic effect.

In order to produce coatings, the acrylate polymer can be mixed with the usual additives such as, for instance, pigments, colourants, fillers, thickeners, flow-promoting agents, matting agents and/or stabilizers.

Suitable substrates for the coatings are glass, plastic, wood and metal.

The invention also comprises two-component systems based on an amine, ketimine or aldimine-functional acrylate polymer with a hydroxyl number lower than 100 mg KOH/gram and an amine number of between 10 and 150 mg KOH/gram as the first component and a low molecular weight polyacetoacetate as the second component. The second component is preferably a low molecular weight polyacetoacetate which is based on the reaction product of an acetoacetate or diketene and a polyhydroxy-functional monomer or oligomer. The hydroxyl number of the acrylate polymer is preferably lower than 20 and the amine number of the acrylate polymer is preferably between 30 and 100.

The binder composition according to the invention may be used also as basis for adhesive compositions.

The invention will be elucidated by means of the following non-restrictive experiments and examples.

Examples

Experiment I

Preparation of trimethylolpropanetriacetoacetate (TMPTAA)

135 parts by weight trimethylolpropane (TMP) and 464 parts by weight methylacetoacetate were mixed and heated to 120°C and subsequently heated to 160°C for 3-4 hours while the methanol formed was distilled off. After completion of the re-esterification, the material was cooled to 80°C. Subsequently, a vacuum was applied over the mixture, which was then heated slowly to 150°C, in which process all volatile components were distilled off.

Experiment II

Preparation of butanedioldiacetoacetate

180 parts by weight butanediol 1,4 and 700 parts by weight tertiary butylacetoacetate were mixed in a glass, four-necked flask with a capacity of 1500 ml. The arrangement was completed with the installation of a stirrer, a Dean-Stark still head and a nitrogen dip line. The contents of the reaction vessel were heated to 100°C, upon which the reaction started. The tertiary butanol released was distilled off and the reaction mixture was heated slowly to 150°C. After completion of the reaction, the mixture was cooled to 50°C and a vacuum was applied over it. The vacuum distillation was continued to 150°C till all volatile components were removed. The result was a low-viscosity, pale yellow liquid with a viscosity of 10 mPa.s (Emila, 23°C).

Experiment III

The preparation of the ketimine of hydroxyethylamine

61 parts by weight hydroxyethylamine, 100 parts by weight methyl isobutyl ketone (MIBK) and 40 parts by weight toluene were mixed in a reaction vessel at room temperature. The reaction vessel was provided with a mechanical stirrer, a connection for nitrogen and a Dean-Stark still head. The reaction mixture was heated to reflux temperature and the reaction water was carried off by azeotropic distillation. After removal of the reaction water in this manner, the remaining volatile components were distilled off under vacuum, upon which a pale yellow, viscous liquid was obtained.

Experiment IV

The preparation of the ketimine of 3-amino-1-methylaminepropane

60 parts by weight 3-amino-1-methylaminepropane, 80 parts by weight MIBK and 50 parts by weight toluene were treated in the same way as in Experiment III, as a result of which a pale yellow low-viscosity liquid with a viscosity of 5 mPa.s was obtained.

Experiment V

The preparation of the diketimine of diethylenetriamine

45 parts diethylenetriamine, 94 parts MIBK and 40 parts toluene were treated by applying the process described in Experiment III, as a result of which a pale yellow low-viscosity liquid with a viscosity of 15 mPa.s was obtained.

Experiment VI

The preparation of a ketimine-functional acrylate resin, starting from an epoxy acrylate

300 parts by weight propylene glycol methyl ether acetate was weighed and introduced into a four-necked 3000-ml flask and heated to reflux temperature (about 145°C)

A mixture of 430 parts by weight glycidyl methacrylate, 300 parts by weight methyl acrylate, 972 parts by weight methyl methacrylate and 50 parts by weight bis-azo-isobutyronitrile (VAZO 64™ ex Du Pont) was added in drops to the contents of the flask for about 3 hours. The temperature of the reaction mixture was kept at 145°C for 3 hours. Halfway this period again 5 parts by weight benzoyl peroxide was added to the contents of the flask. After that, the solvent (propylene glycol methyl ether acetate) was removed by means of vacuum distillation at abt 160°C. The contents of the flask were poured out and cooled. The result was a solid resin with a Tg of about 55°C.

320 parts by weight of this resin was dissolved while being heated to 90°C in 400 parts by weight methylisobutyl ketone during heating to 90°C. To this mixture 91 parts by weight of the ketimine according to Experiment IV was added. After reaction for about 5 hours at 90°C, the epoxy groups prove to have disappeared (WPE determination through IR analysis). The reaction mixture was cooled and poured out.

The result was a pale yellow resin solution with an amine number of 73 mg KOH/gram. The hydroxyl number was 35 mg KOH/gram.

Experiment VII

The preparation of a ketimine-functional acrylate resin, starting from a hydroxy-functional acrylate resin

1112 parts of a hydroxy-functional polyacrylate resin (75% solid, hydroxy number 140 mg KOH/g, $M_n$ 1500), 462 parts by weight isophorone diisocyanate and 715 parts by weight xylene were mixed in a reaction vessel and heated to 90°C. During the reaction, the decrease of the NCO content was measured and after about 5 hours it had decreased to virtually the theoreticalvalue.

Subsequently, 0.5 parts by weight dibutyltin laurate were added as catalyst to complete the reaction.

1300 parts by weight of the polymer solution thus obtained were mixed with 200 parts by weight xylene. To it were added in drops 180 parts by weight of the ketimine described according to Experiment IV. This was a highly exothermic reaction, which had to be cooled in order not to allow the temperature to rise above 40°C. After addition of the ketimine, the reaction mixture was cooled during stirring.

The result was a pale yellow resin solution with an amine number of 31 mg KOH/g. The hydroxyl number was lower than 5 mg KOH/gramme.

Experiment VIII

The preparation of a ketimine-functional acrylate resin based on the copolymerization of an isocyanate-functional monomer

800 parts by weight butyl acetate was weighed and introduced into a reaction vessel and heated to 110°C. A mixture of 365 parts by weight styrene, 175 parts by weight methyl methacrylate, 180 parts by weight butyl acrylate, 180 parts TMI™ (isocyanate-containing monomer, ex American Cyanamid) and 18 parts by weight VAZO™ was added to the reaction mixture for 6 hours. After all monomers had been added, 3 parts by weight benzoyl peroxide were added every hour (about 4x). After the percentage of solid material had reached the theoretical value, the reaction mixture was cooled and drained.

503 parts by weight of the polymer solution thus obtained was mixed with 50 parts by weight xylene. Of the ketimine from Experiment V 67 parts by weight was added to the polymer solution while the temperature remained below 40°C. After the addition of the ketimine, the ketimine-functional polyacrylate resin could be drained.

The amine number of the resin solution thus obtained was 45 mg KOH/gramme. The hydroxyl number was lower than 5 mg KOH/gramme.

Examples I-III

Bindercomposition and coatings

The coatings were prepared by mixing the polymer and the crosslinking agent in an equimolar ratio at room temperature for 10 minutes. The resulting mixtures were sprayed onto metal test panels (dry coating thickness about 30 microns) and dried at room temperature for 7 days. After one week, the coatings thus obtained were tested as follows.
- Hardness according to König (DIN 53157)
- Chemical resistance (DIN 68681):
  Acetone - 1 minute
  Petrol - 30 minutes
  Xylene - 30 minutes
  Ethanol - 15 minutes
  Gasoil - 1 hour
- Gloss at angles of 20 and 60 degrees. (according to ASTM D 523)
- Drying, dust dry, tack free time in minutes

TABLE I

| Example | Polymer | Crosslinking agent |
|---------|---------|--------------------|
| I | 100 parts by weight according to Exp. VII | 8 parts by weight TMPTAA according to Exp. I |
| II | 100 parts by weight according to Exp. VI | 9 parts by weight TMPTAA according to Exp. I |
| III | 100 parts by weight according to Exp. VIII | 11.3 parts by weight TMPTAA according to Exp. I |

## TABLE II

|  | Mixture I | Mixture II | Mixture III |
|---|---|---|---|
| – Drying | ++ | + | ++ |
| – Hardness 1 day | 110 | 93 | 150 |
| – Hardness 7 days | 147 | 185 | 202 |
| – Gloss 20/60 | 80/98 | 31/78 | 66/99 |
| – Resistance: |  |  |  |
| Acetone | –– | ++ | ++ |
| Petrol | ++ | ++ | ++ |
| Xylene | ++ | + | ++ |
| Ethanol | –– | n | ++ |
| Diesel | ++ | ++ | ++ |

where  ++ = very good

+ = good

– = moderate

–– = poor

n  = not tested

This shows that a binder composition based on an amine, ketimine or aldimine-functional acrylate polymer with a hydroxyl number lower than 100 mg KOH/gram and an amine number of between 10 and 150 mg KOH/gram and a low molecular weight polyacetoacetate as crosslinking agent results in coatings curable at room temperature with a good to very good hardness, a good chemical resistance and a good gloss.

**Claims**

1. Binder composition based on an acrylate polymer and a crosslinking agent based on an acetoacetate compound, characterized in that the acrylate polymer is an amine, ketimine or aldimine-functional acrylate copolymer with a hydroxyl number lower than 100 mg KOH/gram and an amine number of between 10 and 150 mg KOH/gram.

2. Binder composition according to claim 1, characterized in that the crosslinking agent is a low molecular weight polyacetoacetate.

3. Binder composition according to claim 2, characterized in that the low molecular weight polyacetoacetate is the reaction product of an acetoacetate or diketene and a polyhydroxy-functional monomer or oligomer.

4. Coating curable at room temperature based on a binder composition according to any one of claims 1-3.

5. Process for preparing coatings based on a binder composition according to any one of claims 1-3, characterized in that 2-50 parts by weight polyacetoacetate and 50-98 parts by weight polymer are mixed at temperatures of between 15°C and 30°C.

6

6. A two-component system based on an amine, ketimine or aldimine-functional acrylate copolymer with a hydroxyl number lower than 100 mg KOH/gram and an amine number of between 10 and 150 mg KOH/gram as a first component and a low molecular weight polyacetoacetate as a second component.

7. A two-component system according to claim 6, characterized in that the second component is a low molecular weight polyacetoacetate comprising the reaction product of an acetoacetate or diketene and a polyhydroxy-functional monomer or oligomer.

8. Application of a binder composition according to any one of claims 1-3, application of a coating according to claim 4, application of a coating obtained according to claim 5 or applicaiton of a two-component system according to any oen of claims 6-7.

**Claims for the following Contracting State : ES**

1. Process for preparation coatings based on a binder composition based on an acrylate polymer and a crosslinking agent based on an acetoacetate compound, characterized in that 2-50 parts by weight polyacetoacetate and 50-98 parts by weight of an amine, ketimine or aldimine-functional acrylate copolymer with a hydroxyl number lower than 100 mg KOH/gram and an amine number of between 10 and 150 mg KOH/gram are mixed at temperatures of between 15°C and 30°C.

2. Process according to claim 1, characterized in that the crosslinking agent is a low molecular weight polyacetoacetate.

3. Process according to claim 2, characterized in that the low molecular weight polyacetoacetate is the reaction product of polyacetoacetate based on an acetoacetate or diketene and a polyhydroxy-functional monomer or oligomer.

4. Coating curable at room temperature based on a binder composition obtained according to any one of claims 1-3.

5. Application of a binder composition obtained according to any one of claims 1-3, or application of a coating according to claim 4.

6. Use of a two-component system based on an amine, ketimine or aldimine-functional acrylate polymer with a hydroxyl number lower than 100 mg KOH/gram and an amine number of between 10 and 150 mg KOH/gram as a first component and a low molecular weight polyacetoacetate as a second component.

7. Use of a two-component system according to claim 6, characterized in that the second component is a low molecular weight polyacetoacetate comprising the reaction product of an acetoacetate or diketene and a polyhydroxy-functional monomer or oligomer.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A, D | EP-A-0 136 411 (BASF FARBEN + FASERN AG)<br>* claim 1 *<br>--- | 1 | C09D133/06<br>C08K5/10 |
| A | CS-A-264 853 (KRECEK)<br>* page 3; claim 1; examples 2-4 *<br>----- | 1 | |

TECHNICAL FIELDS
SEARCHED (Int. Cl.5 )

CD9D
C08K

The present search report has been drawn up for all claims

| Place of search | Date of completion of the search | Examiner |
|---|---|---|
| THE HAGUE | 09 JANUARY 1992 | D. SCHULER |

EPO FORM 1503 03.82 (P0401)